**Europäisches Patentamt**

**European Patent Office**

**Office européen des brevets**

(19)

(11) Veröffentlichungsnummer: **0 302 353 B1**

# EUROPÄISCHE PATENTSCHRIFT

(12)

(45) Veröffentlichungstag der Patentschrift:
27.02.91 Patentblatt 91/09

(51) Int. Cl.$^5$: **F28F 9/16, F16L 41/08, B21D 39/06, F28F 21/08, F28F 1/00**

(21) Anmeldenummer: **88111976.2**

(22) Anmeldetag: **25.07.88**

(54) **Wärmetauscherrohr.**

(30) Priorität: **06.08.87 DE 3726263**

(43) Veröffentlichungstag der Anmeldung:
**08.02.89 Patentblatt 89/06**

(45) Bekanntmachung des Hinweises auf die Patenterteilung:
**27.02.91 Patentblatt 91/09**

(84) Benannte Vertragsstaaten:
**AT CH DE FR LI NL SE**

(56) Entgegenhaltungen:
**CH-A- 383 706**

(56) Entgegenhaltungen:
**DE-A- 1 601 183**
**DE-B- 1 122 031**
**FR-A- 2 275 723**
**PATENT ABSTRACTS OF JAPAN, Band 8, Nr. 20, (M-271)[1457] 27. Januar 1984, Seite 9 M 271; & JP-A-58 178 196 (MITSUBISHI JUKO-GYO K.K.) 19-10-1983**

(73) Patentinhaber: **Siemens Aktiengesellschaft Wittelsbacherplatz 2 D-8000 München 2 (DE)**

(72) Erfinder: **Schmitz, Friedhelm Elisabethstrasse 39 D-4220 Dinslaken (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Siemens Aktiengesellschaft

Wärmetauscher und entsprechendes
Wärmetauscherrohr

Die vorliegende Erfindung betrifft ein Wärmetauscherrohr und dessen Verwendung für einem Wärmetauscher.

Aus "Dechema-Monographien Band 103 - VCH Verlagsgesellschaft 1986" mit dem Titel "Aktuelle Werkstoff- und Verarbeitungsfragen des Apparatebaues", insb. S. 1 bis 65, sind die verschiedensten Verfahren zur Befestigung von Wärmetauscherrohren in Rohrböden von Wärmetauschern bekannt. Die wirtschaftlichsten Verbindungen entstehen durch Aufweiten der Wärmetauscherrohre, nachdem diese in entsprechende Löcher der Rohrböden eingesetzt worden sind. Das Aufweiten kann dabei durch Walzen, hydraulisches Aufweiten oder Explosiv-Verfahren usw. bewerkstelligt werden.

Es ist andererseits bekannt, daß der Wärmeübergang, d. h. der Wirkungsgrad eines Wärmetauschers u. a. von der Wanddicke der verwendeten Wärmetauscherrohre abhängt. Aus diesem Grunde ist es wünschenswert, möglichst dünnwandige Wärmetauscherrohre herzustellen, wobei dies insbesondere bei teuren Materialien, wie nichtrostenden Stählen oder Titan zu einer ganz erheblichen Material- und damit Kosteneinsparung infolge Verringerung der Wanddicke und der Wärmetauscheroberfläche führt. Der Vorteil ist dabei um so höher, je größer das Verhältnis Materialwert zu den Verarbeitungskosten ist ; macht sich also besonders bei molybdänhaltigen, nichtrostenden Stählen, Titan-, Zirkon- und Tantal-Legierungen bemerkbar. Da diese Werkstoffe im Gegensatz zu Kupferlegierungen praktisch keine Abzehrung über die Dauer der vorgesehenen Betriebszeit erleiden, ist eine Wanddickenreduzierung technisch vertretbar.

Schwierigkeiten bei der Verwendung sehr dünnwandiger Rohre ergeben sich jedoch dadurch, daß mit ihnen nur noch eine geringere Haftfestigkeit und Dichtheit nach dem Aufweiten im Rohrboden erreicht werden kann. Mit sehr dünnwandigen Rohren lassen sich daher nicht leicht reproduzierbare und haltbare Verbindungen in Rohrböden herstellen.

In der DE-A-16 01 183 wird ein Röhrenwärmetauscher für Fahrzeug-Gasturbinen u. dgl. vorgeschlagen, bei welchem die Wärmetauscherröhren dickwandigere Enden aufweisen, um ein Einlöten zu erleichtern und die Stabilität bei Wärmespannungen zu erhöhen. Die Probleme beim Befestigen durch Einwalzen werden hier wegen der kleinen Dimensionen der Rohre, die ein Einwalzen oder Aufweiten ausschließen, nicht weiter betrachtet.

In der JP-A-58-178 196 wird die Verstärkung von dünnwandigen Rohren im Bereich der Befestigung in Rohrböden durch Einsatzhülsen beschrieben. Diese Einsatzhülsen können die Haftkräfte nach dem Aufweiten vergrößern, erfordern aber einen erhöhten Montageaufwand beim Befestigen der Rohre in Rohrböden.

Im Zuge der fortschreitenden Schweißtechnik ist es jedoch möglich, z. B. Rundschweißnähte zwischen Rohrstücken herzustellen, die allen Anforderungen für den Betrieb in einem Wärmetauscher genügen.

Ausgehend von diesem Stand der Technik liegt der Erfindung die Aufgabe zugrunde, Wärmetauscherrohre und daraus aufgebaute Wärmetauscher zu schaffen, die im Bereich der Wärmetauscherflächen sehr dünne Wände aufweisen, die aber trotzdem problemlose Verbindungen zwischen Rohr und Rohrboden durch Aufweiten zulassen.

Zur Lösung dieser Aufgabe werden Wärmetauscherrohre gemäß den kennzeichnenden Merkmalen des Anspruchs 1 vorgeschlagen. Durch etwas dickwandigere Endabschnitte an einem auf seiner übrigen Länge dünnwandigen Rohr kann die gestellte Aufgabe gelöst werden. Die Endabschnitte können z. B. durch kleine Schweißmaschinen zu relativ geringen Kosten an die zunächst hergestellten dünnwandigeren Rohre angeschweißt werden. Die Materialersparnis auf dem größten Teil der Länge des Wärmetaucherrohres und die Vorteile von dünnwandigen Rohren in Wärmetauschern bezüglich des Wirkungsgrades überwiegen bei weitem die Kosten für das Anschweißen von kurzen dickwandigeren Endstücken. Die Rohrenden lassen sich so jedoch problemlos nach dem Stand der Technik durch Aufweiten in den Rohrböden befestigen.

Um ein problemloses Einschieben der Rohre in einen Wärmetauscher zu ermöglichen, wird es im allgemeinen gemäß Anspruch 2 dünstig sein, die Endbereiche mit einem verringerten Innendurchmesser herzustellen und den Außendurchmesser über der gesamten Länge konstant zu halten.

Gemäß Anspruch 3 können die Endbereiche aus durch Rundschweißnähte befestigten Anschweißenden bestehen. Solche Rundschweißnähte lassen sich inzwischen mit für Wärmetauscher geeigneter Qualität herstellen, ohne daß dadurch zusätzliche Nachteile entstehen.

Gemäß Anspruch 4 brauchen die Endbereiche der Wärmetauscherrohre nur etwa der Dicke der vorgesehenen Rohrböden zu entsprechen, also beispielsweise etwa 5 cm lang zu sein. Auf die genaue Länge der Endbereiche kommt es allerdings nicht an, so daß aus fertigungstechnischen Gründen auch etwas längere oder kürzere Anschweißenden vorgesehen werden können.

In bezug auf die Einsparungen ist die vorliegende Erfindung besonders wirkungsvoll bei den im Anspruch 5 angegebenen Materialien, nämlich nichtrostenden Stählen, insb. molybdänhaltigen Stählen oder bei Nicht-Eisenmetallen, wie z. B. Titan, Zirkon oder Tantal.

Ein weiterer Vorteil der erfindungsgemäßen Wärmetauscherrohre besteht darin, daß durch den neuartigen Aufbau die Möglichkeit gegeben wird, unterschiedliche Abschnitte des Rohres, die verschiedenen Beanspruchungen ausgesetzt sind, auch aus verschiedenen, den Beanspruchungen entsprechenden Materialien herzustellen. Wie in den Ansprüchen 6, 7 bzw. 8 angegeben, ist es insbesondere möglich, die Anschweißenden aus einem weichen, gut verformbaren Material, vorzugsweise mit einer Oberfläche, die eine optimale Haftung gewährleistet, herzustellen, während das restliche Rohr aus einem höherfesten Werkstoff besteht. Während es bisher immer schwierig war, bei einstückigen Wärmetauscherrohren einen Kompromiß bezüglich der gewünschten Eigenschaften in den einzelnen Teilbereichen zu erzielen, ist dies bei erfindungsgemäßen Wärmetauscherrohren problemlos möglich. Dies geht so weit, daß die Anforderung an die Reinheit des Werkstoffes für den mittleren Bereich der Wärmetauscherflächen reduziert werden kann, während der qualitativ hochwertigere, reinere und besser verformbare Werkstoff nur noch an den Anschweißenden erforderlich ist, z. B. Anschweißende : Titan, Gr. 1, ungeglüht ; Rest : Titan, Gr. 3, geglüht. Eine entsprechende Verwendung erfindungsgemäßer Rohre zum Aufbau eines Wärmetauschers ist in Anspruch 9 angegeben.

Ausführungsbeispiele der Erfindung sind schematisch in der Zeichnung dargestellt, und zwar zeigen :

Fig. 1 einen Längsschnitt durch ein erfindungsgemäßes Wärmetauscherrohr und Teile der Rohrböden, in denen es befestigt ist,

Fig. 2 einen Längsschnitt durch ein Ende eines erfindungsgemäßen Wärmetauscherrohres.

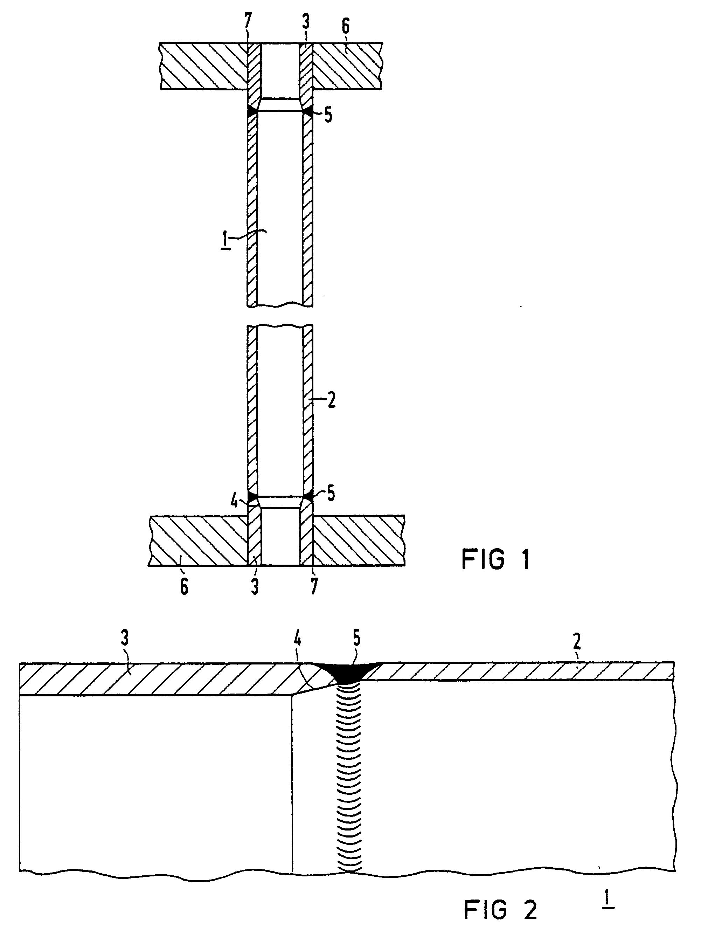

Wie aus den Fig. 1 und 2 hervorgeht, besteht bei einem Ausführungsbeispiel ein erfindungsgemäßes Wärmetauscherrohr 1 aus einem mittleren dünnwandigen Abschnitt 2, der weitaus den größten Teil der Rohrlänge ausmacht, und zwei kurzen etwas dickwandigeren Anschweißenden 3. Die Abschnitte 2 und 3 sind durch Rundschweißnähte 5 miteinander verbunden. Falls eine solche Rundschweißnaht nicht problemlos zwischen zwei stumpf aufeinander stoßenden Rohren unterschiedlicher Wanddicke herstellbar ist, kann das anzuschweißende Ende jedes Anschweißendes 3 so vorgearbeitet sein, daß sich seine Wanddicke in einer Übergangsflanke 4 auf die des mittleren Rohrabschnittes 2 verjüngt. Bei den absolut sehr kleinen Unterschieden der Wanddicken ist dies in der Praxis jedoch nicht unbedingt notwendig. Die dickwandigeren Anschweißenden 3 lassen sich problemlos durch Aufweiten in den Rohrböden 6 eines Wärmetauschers befestigen. Die so entstehenden reibschlüssigen Verbindungen 7 entsprechen denen von Rohren, die insgesamt die Wanddicke der Endstücke 3 haben. Durch das Mittelstück mit verringerter Wanddicke können jedoch der Wirkungsgrad unter Berücksichtigung einer angepaßten Konstruktion ohne sonstige Nachteile vergrößert werden, und erhebliche Anteile an Material werden eingespart.

## Ansprüche

1. Wärmetauscherrohr mit einer Wanddicke kleiner=0,5 mm, auf dem größten Teil ihrer Länge, vorzugsweise etwa 0,3 mm, wobei das Rohr (1) aus drei Abschnitten (2, 3) besteht, nämlich einem dünnwandigen mittleren Bereich (2) mit der obigen Wanddicke kleiner=0,5 mm, vorzugsweise etwa 0,3 mm, und zwei angeschweißten, durch Aufweiten dauerhaft in einem Rohrboden (6) zu befestigenden, dickwandigeren Endbereichen (3) mit einer Wanddicke größer=0,5 mm, vorzugsweise von etwa 0,7 bis 1 mm.

2. Wärmetauscherrohr nach Anspruch 1, **dadurch gekennzeichnet**, daß die Endbereiche (3) einen verringerten Innendurchmesser und den gleichen Außendurchmesser wie der mittlere Bereich (2) haben.

3. Wärmetauscherrohr nach Anspruch 1 oder 2, **dadurch gekennzeichnet**, daß die Endbereiche aus durch Rundschweißnähte (5) mit dem dünnwandigen mittleren Abschnitt (2) verbundenen Anschweißenden (3) bestehen.

4. Wärmetauscherrohre nach einem der Ansprüche 1 bis 3, **dadurch gekennzeichnet**, daß die Endbereiche (3) etwas länger als die Dicke üblicher Rohrböden (6) in Wärmetauschern sind, beispielsweise etwa 5 cm lang.

5. Wärmetauscherrohr nach einem der vorhergehenden Ansprüche, **dadurch gekennzeichnet**, daß die Rohre aus nicht rostendem Stahl, Titan, Zirkon oder Tantal bzw. deren Legierungen bestehen.

6. Wärmetauscherrohr nach einem der vorhergehenden Ansprüche **dadurch gekennzeichnet**, daß die Teilbereiche (2, 3) des Rohres (1) aus unterschiedlichen, den verschiedenen Beanspruchungen in den Teilbereichen entsprechenden Materialien bestehen.

7. Wärmetauscherrohr nach Anspruch 6, **dadurch gekennzeichnet**, daß die Anschweißenden (3) aus einem weichen, gut verformbaren Material, vorzugsweise mit einer Oberfläche, die eine optimale Haftung gewährleistet, bestehen, während das restliche Rohr (2) aus einem höher-festen Werkstoff besteht.

8. Wärmetauscherrohr nach Anspruch 7, **dadurch gekennzeichnet**, daß die Anschweißenden (3) aus reinerem Werkstoff bestehen als das restliche Rohr (2).

9. Verwendung von Wärmetauscherrohren nach einem der vorhergehenden Ansprüche zum Aufbau eines Wärmetauschers mit vielen, im wesentlichen parallelen Rohren (1), die durch Einwalzen oder anderweitiges Aufweiten an ihren Enden in Rohrböden befestigt sind und zumindest auf dem größten Teil ihrer Länge eine Wanddicke kleiner=0,5 mm, vorzugsweise etwa 0,3 mm haben.

## Claims

1. A heat exchanger tube with a wall thickness of less than=0.5 mm on the largest part of its length, preferably approximately 0.3 mm, wherein the tube (1) consists of three sections (2, 3), namely a thin-walled central region (2) with the above-mentioned wall thickness being smaller than=0.5 mm, preferably approximately 0.3 mm and two welded-on thicker-walled end regions (3) with a wall thickness of greater than=0.5 mm, preferably approximately 0.7 to 1 mm, said regions to be secured by expanding permanently in a tube plate (6).

2. A heat exchanger tube according to claim 1, characterised in that the end regions (3) have a reduced inner diameter and the same outer diameter as the central region (2).

3. A heat exchanger according to claim 1 or 2, characterised in that the end regions consist of welding ends (3) connected through circumferential welding joints (5) to the thin-walled central section (2).

4. A heat exchanger tube according to one of claims 1 to 3, characterised in that the end regions (3) are somewhat longer than the thickness of the usual tube plates (6) in heat exchangers for example approximately 5 cm long.

5. A heat exchanger tube according to one of the preceding claims, characterized in that the tubes consist of stain less steel, titanium, zirconium or tantalum or alloys thereof.

6. A heat exchanger tube according to one of the preceding claims, characterised in that the partial regions (2, 3) of the tube (1) consist of varying materials corresponding to the different stresses in the partial regions.

7. A heat exchanger tube according to claim 6, characterised in that the welding ends (3) consist of soft, easily deformable material preferably with a surface, which guarantees an optimum adhesion, whilst the remaining tube (2) consists of a firmer material.

8. A heat exchanger tube according to claim 7 characterised in that the welding ends (3) consist of purer material than the remaining tube (2).

9. The use of heat exchanger tubes according to one of the preceding claims for constructing a heat exchanger with many substantially parallel tubes (1) which are secured by rolling or other expansion at their ends in the tube plates and have at least on the largest part of their length a wall thickness of smaller than 0.5 mm preferably approximately 0.3 mm.

## Revendications

1. Tube d'échangeur de chaleur ayant une épaisseur de paroi inférieure ou égale à 0,5 mm sur la plus grande partie de sa longueur, de préférence de 0,3 mm environ, le tube (1) étant constitué de trois tronçons (2, 3) à savoir une partie médiane (2) à paroi mince ayant l'épaisseur de parois mentionnée ci-dessus inférieure ou égale à 0,5 mm et, de préférence, d'environ 0,3 mm, et deux parties d'extrémité (3) à paroi plus épaisse soudées et à fixer par élargissement, d'une manière permanente, dans une plaque tubulaire (6), qui ont une épaisseur de paroi supérieure ou égale à 0,5 mm et de référence, de 0,7 à 1 mm environ.

2. Tube d'échangeur de chaleur suivant la revendication 1, caractérisé en ce que les parties d'extrémité (3) ont un diamètre intérieur moindre et le même diamètre extérieur que la partie intermédiaire (2).

3. Tube d'échangeur de chaleur suivant la revendication 1 ou 2, caractérisé en ce que les parties d'extrémité sont constituées d'extrémités soudées (3) reliées au tronçon médian (2) à paroi mince par des cordons de soudure ronds (5).

4. Tube d'échangeur de chaleur suivant l'une des revendications 1 à 3, caractérisé en ce que les parties d'extrémité (3) sont un peu plus longues que l'épaisseur de plaques tubulaires (6) habituel les des échangeurs de chaleur, en ayant par exemple une longueur de 5 cm environ.

5. Tube d'échangeur de chaleur suivant l'une des revendications précédentes, caractérisé en ce que les tubes sont en acier inoxydable, en titane, en zirconium ou en tantale ou en leurs alliages.

6. Tube d'échangeur de chaleur suivant l'une des revendications précédentes caractérisé en ce que les parties (2, 3) du tube (1) sont en matériau différent correspondant aux contraintes différentes dans ces parties.

7. Tube d'échangeur de chaleur suivant la revendication 6, caractérisé en ce que les extrémités soudées (3) sont en un matériau mou et bien déformable ayant, de préférence, une surface qui assure une fixation optimum, tandis que le reste du tube (2) est en un matériau très rigide.

8. Tube d'échangeur de chaleur suivant la revendication 7, caractérisé en ce que les extrémités soudées (3) sont en un matériau plus pur que le reste du tube (2).

9. Utilisation de tubes d'échangeurs de chaleur suivant l'une des revendications précédentes, pour la construction d'un échangeur de chaleur ayant plusieurs tubes (1) sensiblement parallèles, dont les extrémités sont fixées par dudgeonnage ou par élargissement d'une autre façon dans des plaques tubulaires et dont au moins la plus grande partie de leur longueur a une épaisseur de parois inférieure ou égale à 0,5 mm et, de préférence, de 0,3 mm environ.

FIG 1

FIG 2    1

5